# FASCICULE DE BREVET EUROPEEN

(11) **EP 3 365 234 B1**
(45) Date de publication et mention de la délivrance du brevet: **15.01.2020**
(21) Numéro de dépôt: 16794368.7
(22) Date de dépôt: 05.10.2016
(51) Int. Cl.: B64G 1/22

(54) **DISPOSITIF DE VERROUILLAGE DE DEUX PIÈCES L'UNE PAR RAPPORT À L'AUTRE**
ANORDNUNG ZUR VERRIEGELUNG ZWEIER TEILE ZUEINANDER
DEVICE FOR LOCKING TWO PARTS RELATIVE TO EACH OTHER

(30) Priorité: 21.10.2015 FR 1502230
(43) Date de publication de la demande: 29.08.2018
(73) Titulaire: ARIANEGROUP SAS, 75015 Paris (FR)
(72) Inventeur: GROSROYAT, Sylvain, 78580 Maule (FR)
(74) Mandataire: Brevalex
(86) Numéro de dépôt international: PCT/FR2016/000156
(87) Numéro de publication internationale: WO 2017/068246

(56) Documents cités:
- EP-A1- 2 468 629
- WO-A1-2014/153754

## Description

La présente invention concerne un dispositif de verrouillage de deux pièces l'une par rapport à l'autre. Quoique non exclusivement, elle est particulièrement appropriée à être mise en œuvre dans le domaine spatial et elle sera expliquée ci-après en rapport avec ce domaine particulier.

On sait que les satellites et les véhicules spatiaux peuvent comporter des structures de grandes dimensions, tels que des réflecteurs radio ou optiques. Pour pouvoir être emportées par les lanceurs, ces structures doivent être conçues en plusieurs parties repliables pour en diminuer le volume à une valeur compatible avec le volume disponible à bord desdits lanceurs, ces parties repliables étant ensuite déployées et solidarisées entre elles après largage hors desdits lanceurs, pour reformer lesdites structures.

Or, par suite des grandes dimensions et de la grande souplesse de ces structures et des imprécisions de cinématique des dispositifs de déploiement desdites parties repliables, il est souvent difficile, sinon impossible, de reconstituer les structures, à partir desdites parties repliables, avec une excellente précision géométrique.

Par ailleurs, on connaît :
- par le document EP 2 468 629, un dispositif de verrouillage de deux pièces, comprenant un élément mâle convergent et un élément femelle divergent, de formes complémentaires ; et
- par le document WO 2014/153754, un dispositif de connexion pour lampes, comprenant une plaque de fixation de lentille apte à être montée et démontée de façon pratique.

L'objet de la présente invention est de remédier à l'inconvénient précité.

À cette fin, selon la présente invention, le dispositif de verrouillage de deux pièces (ou de deux parties d'une structure) l'une par rapport à l'autre, comprenant :
- une première partie fixée à l'une desdites pièces et comportant un élément mâle convergent ; et
- une seconde partie fixée à l'autre desdites pièces et comportant un élément femelle divergent, de forme complémentaire de celle dudit élément mâle convergent,
   est remarquable en ce que ladite seconde partie comporte de plus :
   - un boîtier, en communication avec ledit élément femelle divergent à travers la petite section de ce dernier ;
   - un corps mobile, disposé à l'intérieur dudit boîtier et pouvant prendre :
      ∘ soit une position d'attente armée dans laquelle ledit corps mobile est maintenu dans ledit boîtier par un dispositif de blocage commandable,
      ∘ soit une position de verrouillage dans laquelle ledit élément mâle est verrouillé dans ledit élément femelle, ledit corps mobile passant spontanément de ladite position d'attente armée à ladite position de verrouillage par inhibition de l'action dudit dispositif de blocage par ledit élément mâle convergent lorsque celui-ci est introduit dans ledit élément femelle divergent ; et
   - une pluralité de lamelles élastiques d'accrochage, solidaires dudit corps mobile et pourvues d'un crochet à leur extrémité libre opposée à ce dernier, lesdites lamelles d'accrochage :
      ∘ s'étendant dans ledit élément femelle divergent en s'écartant l'une de l'autre pour former, pour ledit élément mâle convergent, un réceptacle évasé, élastiquement déformable, à l'intérieur dudit élément femelle divergent, et
      ∘ effectuant, pendant le passage dudit corps mobile de la position d'attente armée à la position de verrouillage et à l'aide desdits crochets, d'abord la capture et la traction dudit élément mâle convergent, puis, lorsque ledit corps mobile est dans la position de verrouillage, le maintien ferme dudit élément mâle convergent contre ledit élément femelle divergent.

Ainsi, grâce à la présente invention, à la fin du verrouillage des deux pièces, qui peuvent être deux parties d'une structure, celles-ci sont verrouillées dans une position géométrique précise désirée, grâce à la capture, au guidage et au maintien en position réalisés par lesdites lamelles élastiques, agissant en coopération avec lesdits éléments mâle et femelle.

De préférence, afin d'assurer un excellent guidage et un excellent maintien de l'élément mâle convergent par l'élément femelle divergent, il est avantageux que lesdites lamelles d'accrochage soient logées dans des rainures de la paroi interne dudit élément femelle divergent, lesdites rainures guidant lesdites lamelles d'accrochage en coulissement lorsque ledit corps mobile passe de ladite position d'attente armée à ladite position de verrouillage.

De plus, en position de verrouillage, lesdites lamelles élastiques sont escamotées dans lesdites rainures, de sorte que la paroi externe de l'élément mâle convergent est au contact direct de la paroi interne de l'élément femelle divergent, ce qui assure un maintien ferme entre lesdits éléments.

De préférence, ledit élément mâle convergent comporte une base transversale pour l'accrochage des crochets des lamelles d'accrochage. Avantageusement, cette base transversale comporte un bord périphérique aigu pour faciliter l'accrochage des crochets desdites lamelles élastiques.

Ledit élément mâle convergent et ledit élément femelle divergent peuvent être de forme conique. Toutefois, dans un mode de réalisation interdisant toute rotation entre lesdits éléments mâle et femelle après verrouillage, ceux-ci peuvent présenter une forme pyramidale.

Avantageusement, en position d'attente armée, ledit corps mobile est chargé par au moins un ressort, dont la détente est sous la commande dudit dispositif de blocage commandable. Ce dernier peut comporter au moins un doigt de blocage qui bloque ledit corps mobile dans ledit boîtier et un coulisseau de détente est prévu pour la commande dudit doigt de blocage, ledit coulisseau de détente étant monté coulissant de façon limitée dans ledit corps mobile et étant accessible audit élément mâle convergent à l'intérieur dudit élément femelle divergent.

Eventuellement, au moins un ressort prenant appui sur ledit corps mobile peut presser ledit coulisseau de détente en direction dudit élément femelle divergent.

Dans un mode de réalisation avantageux, ledit doigt de blocage peut être disposé transversalement audit coulisseau de détente et s'appuyer sur ce dernier qui alors présente un profil à came. Ainsi, grâce à une telle disposition, ledit doigt de blocage peut, pour une position déterminée du coulisseau de détente, se déplacer radialement en mettant fin au blocage entre ledit boîtier et ledit corps mobile et en permettant à ce dernier de passer de la position d'attente armée à la position de verrouillage.

Un dispositif de réglage de la pression d'appui dudit doigt de blocage sur ledit coulisseau de détente peut être prévu.

De préférence, le dispositif de verrouillage conforme à la présente invention est configuré pour être apte à passer de ladite position de verrouillage à ladite position d'attente armée par simple action volontaire sur ledit corps mobile, à l'intérieur de ce dernier. À cet effet, il est avantageux que, du côté opposé audit élément femelle divergent, ledit boîtier soit ouvert ou ouvrant pour permettre l'accès audit corps mobile.

La présente invention concerne de plus une structure comportant au moins deux parties et au moins un dispositif de verrouillage, tel que décrit ci-dessus, pour verrouiller lesdites parties entre elles.
Les figures du dessin annexé feront bien comprendre comment l'invention peut être réalisée. Sur ces figures, des références identiques désignent des éléments semblables.
La figure 1 est une vue en perspective éclatée d'un exemple de réalisation du dispositif de verrouillage conforme à la présente invention.
La figure 2 illustre, en coupe longitudinale, le dispositif de verrouillage de la figure 1 en position d'attente armée.
La figure 3 illustre, en coupe longitudinale, le dispositif de verrouillage des figures 1 et 2 juste avant le passage de ladite position d'attente armée à la position de verrouillage.
La figure 4 illustre, en coupe longitudinale, le dispositif de verrouillage des figures 1 à 3 en position de verrouillage.
La figure 5 est une vue en bout, du côté de l'élément mâle convergent, du dispositif de verrouillage dans la position de verrouillage de la figure 4.

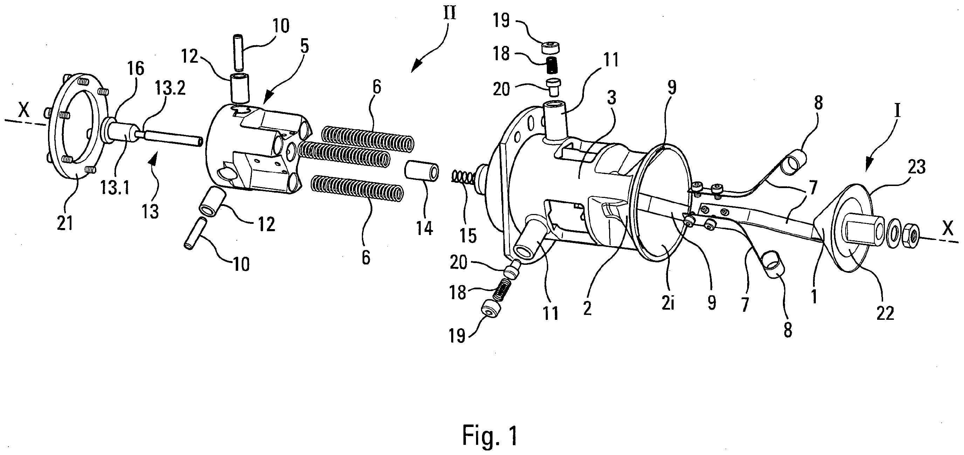

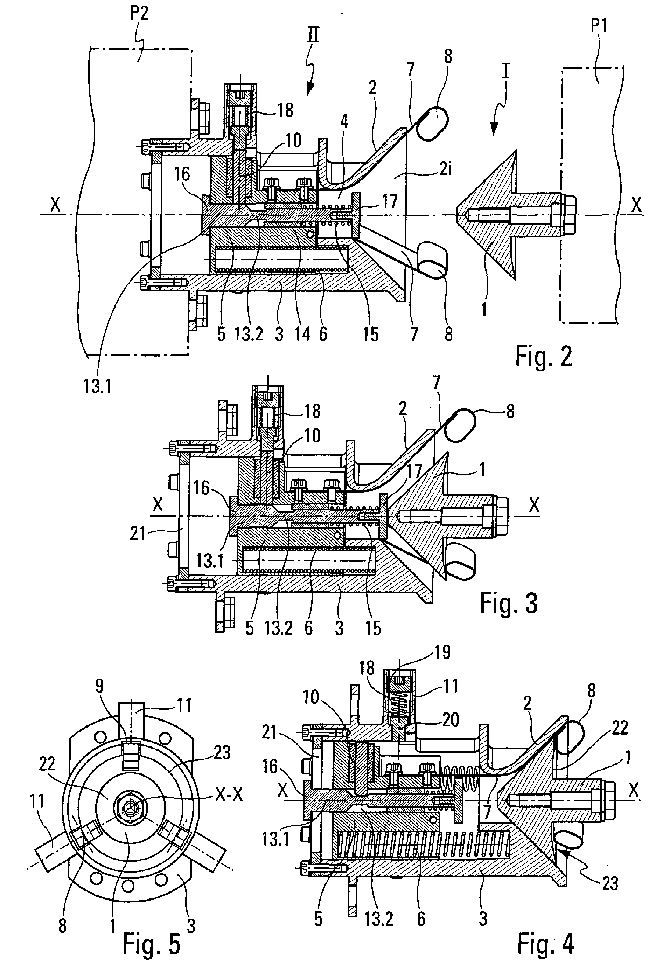

Le dispositif de verrouillage, conforme à la présente invention et représenté sur les figures 1 à 5, comporte une première partie I, fixée à une pièce P1 (représentée de façon schématique uniquement sur la figure 2) et pourvue d'un élément mâle convergent 1, tel qu'un cône ou une pyramide, et une seconde partie II, fixée à une pièce P2 (également représentée de façon schématique uniquement sur la figure 2) et pourvue d'un élément femelle divergent 2 d'axe X-X, de forme complémentaire de celle dudit élément mâle 1. Les pièces P1 et P2 peuvent être deux parties d'une même structure.

La seconde partie II du dispositif de verrouillage conforme à l'invention comporte de plus un boîtier 3, également d'axe X-X, solidaire dudit élément femelle 2 et en communication avec lui, à travers la petite section 4 de ce dernier, ainsi qu'un corps mobile 5, disposé à l'intérieur dudit boîtier 3, coaxialement à l'axe X-X, et pouvant y coulisser à la manière d'un piston, sous l'action ou à l'encontre de l'action de ressorts 6 (par exemple au nombre de trois, régulièrement répartis autour de l'axe X-X du boîtier 3) prenant appui sur ledit boîtier 3.

Ledit corps mobile 5 porte une pluralité de lamelles élastiques d'accrochage 7 qui en sont solidaires et qui sont pourvues d'un crochet 8 à leur extrémité libre opposée audit corps mobile 5. Les lamelles élastiques d'accrochage 7 sont disposées dans ledit élément femelle 2 en s'écartant l'une de l'autre, étant logées dans des rainures 9 de la paroi interne 2i dudit élément femelle 2. Les lamelles élastiques d'accrochage 7 peuvent être au nombre de trois et être régulièrement réparties autour de l'axe X-X du boîtier 3 et de l'élément femelle 2.

La seconde partie II du dispositif de verrouillage comporte de plus un dispositif de blocage commandable dudit corps mobile 5. Ce dispositif de blocage comporte, par exemple, trois doigts de blocage radiaux 10 régulièrement répartis autour de l'axe X-X, et aptes à coulisser radialement par rapport audit corps mobile 5, chacun dans une cheminée radiale 11 du boîtier 3, grâce à un palier 12 qui y est disposé.

Les doigts radiaux de blocage 10 s'appuient radialement sur un coulisseau de détente 13 à profil de came avec une partie 13.1 de grand diamètre et une partie 13.2 de petit diamètre, traversant ledit corps mobile 5 et pouvant y coulisser axialement grâce à un palier 14. Le coulisseau de détente 13 est pressé élastiquement, par un ressort 15, en direction de l'élément femelle 2 et est retenu dans le corps mobile 5 par une butée 16 qu'il porte à l'extrémité opposée audit élément femelle. À son extrémité logée dans ledit élément femelle, le coulisseau de détente 13 porte une touche élargie 17.

La pression d'appui des doigts radiaux de blocage 10 sur le coulisseau de détente 13 peut être réglée grâce à des ressorts 18 qui sont logés dans les cheminées 11 et dont la force est ajustée par des écrous 19 se vissant dans ces dernières. Des coulisseaux 20 peuvent être intercalés entre les ressorts 18 et les doigts de blocage 10.

Du côté opposé à l'élément femelle 2, le boîtier 3 comporte une paroi 21 permettant l'accès au corps mobile 5 et au coulisseau de détente 13. Cette paroi 21 peut être ouverte, comme représentée sur les figures, ou pourrait être ouvrante.

L'élément mâle convergent 1 comporte une base d'accrochage 22 dont le bord périphérique 23 est aigu pour faciliter l'accrochage par les crochets 8 des lamelles élastiques 7.

Comme le montre la figure 2, en position d'attente armée, le corps mobile 5 est disposé, dans le boîtier 3, du côté de l'élément femelle 2 et est bloqué dans cette position par les doigts radiaux de blocage 10 à cheval sur le boîtier 3 et le corps mobile 5. De plus, dans cette position d'attente armée :
- les ressorts 6 sont comprimés entre ledit boîtier 3 et ledit corps mobile 5,
- les doigts de blocage 10 s'appuient élastiquement sur la partie 13.1 de grand diamètre du coulisseau de détente 13, en étant pressés par les ressorts 18,
- éventuellement, le coulisseau de détente 13 est pressé élastiquement par le ressort 15 vers l'élément femelle 2, la touche 17 faisant saillie à l'intérieur de ce dernier et la butée 16 étant en appui contre le corps mobile 5 pour retenir ledit coulisseau de détente 13 dans ce dernier, et
- les lamelles élastiques 7 s'étendent dans l'élément femelle 2, en étant logées dans les rainures 9 de la paroi interne 2i de ce dernier et en formant un réceptacle évasé élastiquement déformable.

Une telle position d'attente armée subsiste jusqu'à ce que l'élément mâle 1 vienne au contact de la touche 17 (voir la figure 3).

Lorsque l'élément mâle 1 presse la touche 17, il comprime le ressort 15 et le coulisseau de détente 13 se déplace en s'éloignant de l'élément femelle 2. Au cours de ce déplacement, le coulisseau de détente 13 défile par rapport aux doigts de blocage 10, de sorte que la partie de grand diamètre 13.1 dudit coulisseau de détente qui se trouvait en regard desdits doigts de blocage 10 est éloignée de ceux-ci et remplacée par la partie de petit diamètre 13.2 dudit coulisseau de détente.

Sous l'action des ressorts 18, lesdits doigts de blocage 10 coulissent radialement dans les cheminées 11 pour venir s'appuyer sur ladite partie de petit diamètre 13.2, ce qui permet auxdits doigts de blocage 10 d'échapper au boîtier 3. Le corps mobile 5 n'est donc plus bloqué par rapport audit boîtier 3 et il se déplace spontanément à l'intérieur de celui-ci, à l'opposé de l'élément femelle 2, sous l'action de la détente des ressorts 6 pour atteindre la position de verrouillage représentée par les figures 4 et 5.

Pendant le passage du corps mobile 5 de la position d'attente armée de la figure 2 à la position de verrouillage des figures 4 et 5, les lamelles élastiques 7 solidaires dudit corps mobile 5 coulissent, en étant guidées, dans les rainures 9 de la paroi interne 2i de l'élément femelle 2 et, à l'aide de leurs crochets 8, capturent le bord aigu 23 de la base 22 de l'élément mâle 1, tirent celui-ci vers ledit élément femelle 2, puis le maintiennent fermement contre ce dernier, lorsque la position de verrouillage des figures 4 et 5 est atteinte.

On comprendra aisément que le dispositif de verrouillage de la présente invention est réversible, c'est-à-dire qu'on peut le faire passer volontairement de la position de verrouillage à la position d'attente armée en pressant ledit coulisseau de détente 13 et ledit corps mobile 5 en direction de l'élément femelle 2. Une telle manoeuvre est effectuée lors de l'armement initial du dispositif, avant introduction de l'élément mâle 1 dans l'élément femelle. Elle peut également être opérée après verrouillage dudit élément mâle 1, pour libérer celui-ci, à condition que ledit élément mâle 1 ne s'oppose pas au coulissement du corps mobile 5 dans sa direction.

## Revendications

1. Dispositif de verrouillage de deux pièces (P1, P2) l'une par rapport à l'autre, comprenant :
- une première partie (I), fixée à l'une desdites pièces (P1) et comportant un élément mâle convergent (1) ; et
- une seconde partie (II), fixée à l'autre desdites pièces (P2) et comportant un élément femelle divergent (2), de forme complémentaire de celle dudit élément mâle convergent (1)
**caractérisé en ce que** ladite seconde partie (II) comporte de plus :
• un boîtier (3), en communication avec ledit élément femelle divergent (2) à travers la petite section (4) de ce dernier ;
• un corps mobile (5), disposé à l'intérieur dudit boîtier (3) et pouvant prendre :
∘ soit une position d'attente armée dans laquelle ledit corps mobile (5) est maintenu dans ledit boîtier (3) par un dispositif de blocage commandable (10 à 12, 18 à 20),
∘ soit une position de verrouillage dans laquelle ledit élément mâle (1) est verrouillé dans ledit élément femelle (2),
ledit corps mobile (5) passant spontanément de ladite position d'attente armée à ladite position de verrouillage par inhibition de l'action dudit dispositif de blocage par ledit élément mâle convergent (1) lorsque celui-ci est introduit dans ledit élément femelle divergent (2) ; et
• une pluralité de lamelles élastiques d'accrochage (7), solidaires dudit corps mobile (5) et pourvues d'un crochet (8) à leur extrémité libre opposée à ce dernier, lesdites lamelles d'accrochage (7) :
∘ s'étendant dans ledit élément femelle divergent (2) en s'écartant l'une de l'autre pour former, pour ledit élément mâle convergent (1), un réceptacle évasé, élastiquement déformable, à l'intérieur dudit élément femelle divergent (2), et
∘ effectuant, pendant le passage dudit corps mobile (5) de la position d'attente armée à la position de verrouillage et à l'aide desdits crochets (8), d'abord la capture et la traction dudit élément mâle convergent (1), puis, lorsque ledit corps mobile (5) est dans la position de verrouillage, le maintien ferme dudit élément mâle convergent (1) contre ledit élément femelle divergent (2).

2. Dispositif de verrouillage selon la revendication 1,
**caractérisé en ce que** lesdites lamelles d'accrochage (7) sont logées dans des rainures (9) de la paroi interne (2i) dudit élément femelle divergent (2), lesdites rainures (9) guidant lesdites lamelles d'accrochage (7) en coulissement lorsque ledit corps mobile (5) passe de ladite position d'attente armée à ladite position de verrouillage.

3. Dispositif de verrouillage selon l'une des revendications 1 ou 2, **caractérisé en ce que** ledit élément mâle convergent (1) comporte une base transversale (22) pour l'accrochage des crochets (8) des lamelles d'accrochage (7).

4. Dispositif de verrouillage selon la revendication 3,
**caractérisé en ce que** ladite base transversale (22) comporte un bord périphérique aigu (23) pour l'accrochage des crochets (8) desdites lamelles élastiques (7).

5. Dispositif de verrouillage selon l'une quelconque des revendications 1 à 4,
**caractérisé en ce que** ledit élément mâle convergent (1) et ledit élément femelle divergent (2) sont coniques.

6. Dispositif de verrouillage selon l'une quelconque des revendications 1 à 4,
**caractérisé en ce que** ledit élément mâle convergent (1) et ledit élément femelle divergent (2) sont pyramidaux.

7. Dispositif de verrouillage selon l'une quelconque des revendications 1 à 6,
**caractérisé en ce que**, en position d'attente armée, ledit corps mobile (5) est chargé par au moins un ressort (6), dont la détente est sous la commande dudit dispositif de blocage commandable (10).

8. Dispositif de verrouillage selon l'une quelconque des revendications 1 à 7,
**caractérisé en ce que** ledit dispositif de blocage commandable (10 à 12, 18 à 20) comporte au moins un doigt de blocage (10) bloquant ledit corps mobile (5) dans ledit boîtier (3) et **en ce qu'**il est prévu un coulisseau de détente (13) pour la commande dudit doigt de blocage (10), ledit coulisseau de détente étant monté coulissant de façon limitée dans ledit corps mobile (5) et étant accessible audit élément mâle convergent (1) à l'intérieur dudit élément femelle divergent (2),

9. Dispositif de verrouillage selon la revendication 8,
**caractérisé en ce qu'**au moins un ressort (15) prenant appui sur ledit corps mobile (5) presse ledit coulisseau de détente (13) en direction dudit élément femelle divergent (2).

10. Dispositif de verrouillage selon l'une des revendications 8 ou 9,
**caractérisé en ce que** ledit doigt de blocage (10) est transversal par rapport audit coulisseau de détente (13) et s'appuie sur ce dernier et **en ce que** ledit coulisseau de détente (13) présente un profil à came.

11. Dispositif de verrouillage selon la revendication 10,
**caractérisé en ce qu'**il comporte un dispositif (18, 19) de réglage de la pression d'appui dudit doigt de blocage (10) sur ledit coulisseau de détente (13).

12. Dispositif de verrouillage selon l'une des revendications 1 à 11,
caractérisé en qu'il est apte à passer de ladite position de verrouillage à ladite position d'attente armée par simple action volontaire sur ledit corps mobile (5) et sur ledit coulisseau de détente (13).

13. Dispositif de verrouillage selon la revendication 12,
caractérisé en que, du côté opposé audit élément femelle divergent (2), ledit boîtier (3) est ouvert ou ouvrant.

14. Structure comportant au moins deux parties,
**caractérisée en ce qu'**elle comporte au moins un dispositif de verrouillage tel que spécifié sous l'une des revendications 1 à 13 pour verrouiller entre elles lesdites parties (P1, P2).

## Patentansprüche

1. Vorrichtung zum gegenseitigen Verriegeln von zwei Stücken (P1, P2) miteinander, umfassend:
- einen ersten Teil (I), welcher an einem der Stücke (P1) befestigt ist und ein konvergentes männliches Element (1) umfasst; und
- einen zweiten Teil (II), welcher an dem anderen der Stücke (P2) befestigt ist und ein divergentes weibliches Element (2) von komplementärer Form zu dem konvergenten männlichen Element (1) umfasst,
**dadurch gekennzeichnet, dass** der zweite Teil (II) ferner umfasst:
- ein Gehäuse (3) in Kommunikation mit dem divergenten weiblichen Element (2) durch den kleinen Abschnitt (4) des letzteren;
- einen beweglichen Körper (5), welcher in dem Inneren des Gehäuses (3) angeordnet ist und einnehmen kann:
∘ entweder eine geladene Ruheposition, in welcher der mobile Körper (5) in dem Gehäuse (3) durch eine betätigbare Blockiervorrichtung (10 bis 12, 18 bis 20) gehalten ist,
∘ oder eine Verriegelungsposition, in welcher das männliche Element (1) in dem weiblichen Element (2) verriegelt ist,
wobei der bewegliche Körper (5) spontan von der geladenen Ruheposition in die Verriegelungsposition durch Hemmung der Wirkung der Blockiervorrichtung durch das konvergente männliche Element (1) übergeht, wenn dieses in das divergente weibliche Element (2) eingeführt wird; und
- eine Mehrzahl von elastischen Kopplungslamellen (7), welche mit dem beweglichen Körper (5) verbunden und mit einem Haken (8) an ihrem freien Ende gegenüber letzterem versehen sind, wobei die Kopplungslamellen (7):
∘ sich in dem divergenten weiblichen Element (2) erstrecken, indem sie sich voneinander abspreizen, um für das konvergente männliche Element (1) eine elastisch verformbare aufgeweitete Aufnahme im Inneren des divergenten weiblichen Elements zu bilden, und
∘ während des Übergangs des beweglichen Körpers (5) von der geladenen Ruheposition in die Verriegelungsposition und mit der Hilfe der Haken (8) zunächst das Einfangen und das Ziehen des konvergenten männlichen Elements (2) und dann, wenn das bewegliche Element (5) in der Verriegelungsposition ist, das Geschlossenhalten des konvergenten männlichen Elements (1) gegen das divergente weibliche Element (2) bewirken.

2. Vorrichtung zum Verriegeln nach Anspruch 1,
**dadurch gekennzeichnet, dass** die Kopplungslamellen (7) in Nuten (9) der Innenwand (2i) des divergenten weiblichen Elements (2) aufgenommen sind, wobei die Nuten (9) die Kopplungslamellen (7) gleitbar führen, wenn der bewegliche Körper (5) von der geladenen Ruheposition in die Verriegelungsposition übergeht.

3. Vorrichtung zum Verriegeln nach einem der Ansprüche 1 oder 2,
**dadurch gekennzeichnet, dass** das konvergente männliche Element (1) eine transversale Basis (22) für das Koppeln der Haken (8) der elastischen Lamellen (7) umfasst.

4. Vorrichtung zum Verriegeln nach Anspruch 3,
**dadurch gekennzeichnet, dass** die transversale Basis (22) einen zulaufenden Umfangsrand (23) für das Koppeln der Haken (8) der elastischen Lamellen (7) umfasst.

5. Vorrichtung zum Verriegeln nach einem der Ansprüche 1 bis 4,
**dadurch gekennzeichnet, dass** das konvergente männliche Element (1) und das divergente weibliche Element (2) konisch sind.

6. Vorrichtung zum Verriegeln nach einem der Ansprüche 1 bis 4,
**dadurch gekennzeichnet, dass** das konvergente männliche Element (1) und das divergente weibliche Element (2) pyramidenförmig sind.

7. Vorrichtung zum Verriegeln nach einem der Ansprüche 1 bis 6,
**dadurch gekennzeichnet, dass** in geladener Ruheposition der bewegliche Körper (5) durch wenigstens eine Feder (6) vorbelastet ist, deren Entspannung unter der Betätigung der betätigbaren Blockiervorrichtung (10) steht.

8. Vorrichtung zum Verriegeln nach einem der Ansprüche 1 bis 7, **dadurch gekennzeichnet, dass** die betätigbare Blockiervorrichtung (10 bis 12, 18 bis 20) wenigstens einen Blockierfinger (10) umfasst, welcher den beweglichen Körper (5) in dem Gehäuse (3) blockiert, und dadurch, dass ein Entspannungsgleitelement (13) für das Betätigen des Blockierfingers (10) vorgesehen ist, wobei das Entspannungsgleitelement gleitend in beschränkter Weise in dem beweglichen Körper (5) montiert und durch das konvergente männliche Element (1) im Inneren des divergenten weiblichen Elements (2) zugänglich ist.

9. Vorrichtung zum Verriegeln nach Anspruch 8,
**dadurch gekennzeichnet, dass** wenigstens eine Feder (15), welche in Anlage an den beweglichen Körper (5) steht, das Entspannungsgleitelement (13) in Richtung des divergenten weiblichen Elements (2) drückt.

10. Vorrichtung zum Verriegeln nach einem der Ansprüche 8 oder 9,
**dadurch gekennzeichnet, dass** der Blockierfinger (10) transversal bezüglich des Entspannungsgleitelements (13) ist und sich an letzterem anlegt, und dadurch, dass das Entspannungsgleitelement (13) ein Nockenprofil aufweist.

11. Vorrichtung zum Verriegeln nach Anspruch 10,
**dadurch gekennzeichnet, dass** es eine Vorrichtung (18, 19) zum Einstellen des Anlagedrucks des Blockierfingers (10) an dem Entspannungsgleitelement (13) umfasst.

12. Vorrichtung zum Verriegeln nach einem der Ansprüche 1 bis 11,
**dadurch gekennzeichnet, dass** sie in der Lage ist, von der Verriegelungsposition in die geladene Ruheposition durch einfache vorsätzliche Wirkung auf den beweglichen Körper (5) und das Entspannungsgleitelement (13) überzugehen.

13. Vorrichtung zum Verriegeln nach Anspruch 12,
**dadurch gekennzeichnet, dass** an der Seite gegenüber dem divergenten weiblichen Element (2) das Gehäuse (3) geöffnet oder sich öffnend ist.

14. Struktur, umfassend wenigstens zwei Teile,
**dadurch gekennzeichnet, dass** sie wenigstens eine Vorrichtung zum Verriegeln wie in einem der Ansprüche 1 bis 13 spezifiziert umfasst, um zwei Teile (P1, P2) zwischen einander zu verriegeln.

## Claims

1. Locking device of two pieces (P1, P2) one with regard to the other, comprising:
- a first section (I), fixed to one of said pieces (P1) and comprising a convergent male element (1); and
- a second section (II), fixed to the other of said pieces (P2) and comprising a divergent female element (2), of a complementary form to said convergent male element (1) **characterised in that** said second section (II) also comprises:
• a casing (3), in contact with said divergent female element (2) through the small section (4) of the latter;
• a moveable body (5) arranged inside said casing (3) and being able to assume:
∘ either a cocked standby position in which said moveable body (5) is kept inside said casing (3) by a controllable blocking device (10 to 12, 18 to 20),
∘ or a locking position in which said male element (1) is locked into said female element (2),
said moveable body (5) moving automatically from said cocked standby position into said locking position by inhibition the action of said blocking device by said convergent male element (1) while it is inserted into said divergent female element (2); and
• a plurality of elastic hanging strips (7), connected to said moveable body (5) and equipped with a hook (8) on their free extremity opposite to the latter, said hanging strips (7):
∘ extending through said divergent female element (2) spreading away from one another to form, for said convergent male element (1), a flared receptacle, elastically deformable, inside said divergent female element (2), and
∘ performing, during transition of said moveable body (5) from the cocked standby position into the locking position with the aid of said hooks (8), firstly the capture and the traction of said convergent male element (1), then, when said moveable body (5) is in the locking position, the firm holding of said convergent male element (1) against said divergent female element (2).

2. Locking device according to claim 1, **characterised in that** said hanging strips (7) are housed in grooves (9) of the internal wall (2i) of said divergent female element (2), said grooves (9) guiding said hanging strips (7) in a sliding motion while said moveable body (5) moves from said cocked standby position into said locking position,

3. Locking device according to one of claims 1 or 2, **characterised in that** said convergent male element (1) comprises a transverse base (22) for the hanging of the hooks (8) of the hanging strips (7).

4. Locking device according to claim 3, **characterised in that** said transverse base (22) comprises an acute edge (23) for the hanging of the hooks (8) of said elastic strips (7).

5. Locking device according to any one of claims 1 to 4, **characterised in that** said convergent male element (1) and said divergent female element (2) are conical.

6. Locking device according to any one of claims 1 to 4, **characterised in that** said convergent male element (1) and said divergent female element (2) are pyramidal.

7. Locking device according to any one of claims 1 to 6, **characterised in that**, in the cocked standby position, said moveable body (5) is loaded by at least one spring (6), of which the relaxation is under the control of said controllable blocking device (10).

8. Locking device according to any one of claims 1 to 7,
**characterised in that** said controllable blocking device (10 to 12, 18 to 20) comprises at least one blocking finger (10) blocking said moveable body (5) in said casing (3) and **in that** it is provided with a sliding trigger (13) for the control of said blocking finger (10), said sliding trigger being mounted in a limited sliding fashion in said moveable body (5) and being accessible to said convergent male element (1) within said divergent female element (2).

9. Locking device according to claim 8, **characterised in that** at least one spring (15) supporting said moveable body (5) presses said sliding trigger (13) in the direction of said divergent female element (2).

10. Locking device according to one of claims 8 or 9, **characterised in that** said blocking finger (10) is transverse with regard to said sliding trigger (13) and presses against the latter, and **in that** said sliding trigger (13) has a cam profile.

11. Locking device according to claim 10, **characterised in that** it comprises a device (18, 19) for the regulation of the applied pressure of said blocking finger (10) on said sliding trigger (13).

12. Locking device according to one of claims 1 to 11, **characterised in that** it is able to move from said locking position into said cocked standby position by simple automatic action on said moveable body (5) and said sliding trigger (13).

13. Locking device according to claim 12, **characterised in that**, on the opposite side of said divergent female element (2), said casing (3) is open or opening.

14. Structure comprising at least two parts, **characterised in that** it comprises at least one locking device as specified under one of claims 1 to 13 for locking said sections (PI, P2) together.
